# DEMANDE DE BREVET EUROPEEN

(11) **EP 1 632 306 A1**
(43) Date de publication de la demande: **08.03.2006**
(21) Numéro de dépôt: 05300627.6
(22) Date de dépôt: 28.07.2005
(51) Int. Cl.: B23K 26/14

(54) **Procédé de soudage hybride laser-MIG à vitesse de fil élevée**

(30) Priorité: 07.09.2004 FR 0451970
(71) Demandeur: L'AIR LIQUIDE S.A., 75321 Paris Cédex 07 (FR); LA SOUDURE AUTOGENE FRANCAISE, 75321 Paris Cédex 07 (FR)
(72) Inventeur: Briand, Francis, 75009 Paris (FR)
(74) Mandataire: Pittis, Olivier

(57) **Abrégé**

Procédé de soudage hybride laser-MIG, dans lequel on remplit au moins une partie d'un chanfrein aménagé entre les bords à souder ensemble en y déposant du métal fondu amené sous forme d'au moins un fil d'apport, la fusion dudit fil d'apport étant obtenue au moyen d'un arc électrique et d'un faisceau laser se combinant l'un à l'autre, caractérisé en ce que le soudage est opéré à une vitesse de soudage d'au moins 2 m/min, la vitesse d'amenée du fil d'apport est d'au moins 20 m/min, et le diamètre du fil d'apport est inférieur à 1,2 mm.

## Description

La présente invention concerne un procédé de soudage hybride laser-MIG mettant en oeuvre des vitesses de fil élevées.

Lorsqu'on veut souder un tube à un autre (raboutage), ou bien fabriquer un tube en soudant longitudinalement les deux bords longitudinaux d'une feuille métallique préalablement conformée en "U" puis en "O", on aménage, en général, des chanfreins sur les bords à souder ensemble, formant typiquement une gorge en forme de « V », de « X »ou autre.

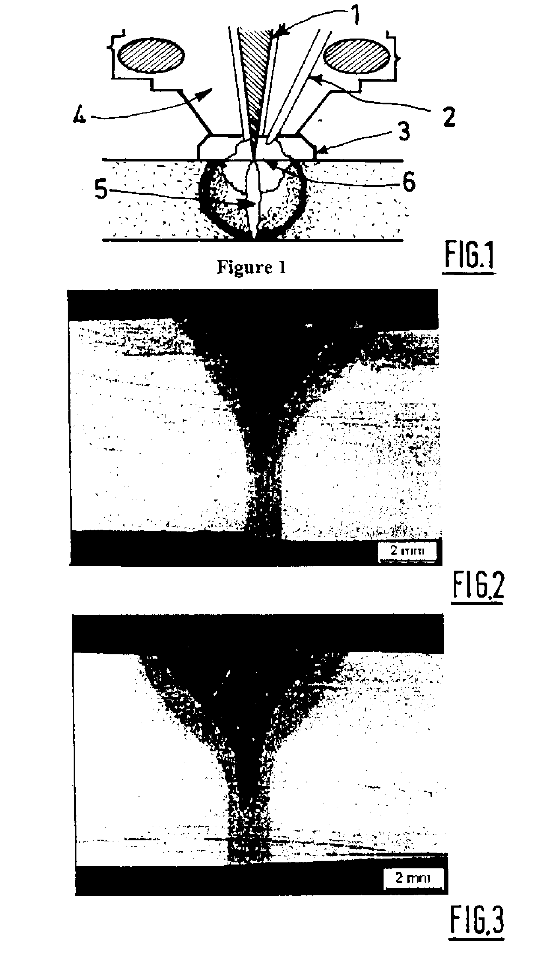

Si l'on veut remplir ce chanfrein en y déposant du métal par mise en oeuvre d'un procédé de soudage hybride laser-MIG (Metal Inert Gas), dont un schéma de principe est donné en Figure 1, il faut atteindre des vitesses de soudage élevées, c'est-à-dire d'au moins quelques m/mn, afin de conserver la productivité du procédé.

Or, plus on augmente la vitesse de soudage, plus la vitesse d'amenée du fil doit être élevée de manière à pouvoir remplir rapidement le volume du chanfrein, c'est-à-dire de la gorge en « V », de « X » ou autre, à la vitesse de soudage considerée.

Dans ces conditions, dès que l'on a des vitesses de soudage de l'ordre de 2 m/mn ou plus, cela conduit, pour typiquement des épaisseurs de 8 mm et compte tenu des formes de chanfrein adoptées, à devoir augmenter la vitesse d'avance du fil au-delà des limites habituellement rencontrées sur des dévidoirs de fils, à savoir typiquement de l'ordre de 20 m/mn.

Une solution est alors, pour augmenter le taux de dépôt déposé, d'augmenter le diamètre de fil puisque les fils classiquement utilisés ont un diamètre de 1,2 mm.

Or, le problème qui se pose alors est que, pour un taux de métal déposé constant, il faut alors plus de courant pour fondre les fils de diamètres élevés, c'est-à-dire de l'ordre de 1,6 mm de diamètre, et, dans ce cas, on se heurte aux limitations en courant de la plupart des générateurs MIG, laquelle est classiquement de l'ordre de 450 A et qui ne permettent donc pas de délivrer des courants supérieurs à cette valeur.

Le problème qui se pose alors est de pouvoir remplir un chanfrein à vitesse élevée sans rencontrer les inconvénients et limitations susmentionnées.

La solution de l'invention est alors un procédé de soudage hybride laser-MIG, dans lequel on remplit au moins une partie d'un chanfrein aménagé entre les bords à souder ensemble en y déposant du métal fondu amené sous forme d'au moins un fil d'apport, la fusion dudit fil d'apport étant obtenue au moyen d'un arc électrique et d'un faisceau laser se combinant l'un à l'autre, caractérisé en ce que le soudage est opéré à une vitesse de soudage d'au moins 2 m/min, la vitesse d'amenée du fil d'apport est d'au moins 20 m/min, et le diamètre du fil d'apport est inférieur à 1,2 mm.

Selon le cas, le procédé de l'invention peut comprendre l'une ou plusieurs des caractéristiques suivantes :
- on met en oeuvre un seul arc électrique et seul un faisceau laser se combinant l'un à l'autre.
- les bords à souder sont portés par une pièce métallique unique ou par deux pièces métalliques différentes.
- l'épaisseur des pièces à souder, mesurée au niveau des bords à souder, est comprise entre 6 et 60 mm.
- les bords à souder sont portés par un ou plusieurs tubes.
- le chanfrein aménagé entre les bords à souder a une forme de "V" ou de "X".
- le soudage est opéré à une vitesse de soudage comprise entre 2,5 et 4 m/mn
- la vitesse d'amenée du fil d'apport est d'au moins 22 m/min, de préférence comprise entre 25 et 35 m/min.
- le diamètre du fil d'apport est inférieur à 1,19 mm, de préférence inférieur à 1,17 mm.
- le diamètre du fil d'apport est supérieur à 0,4 mm.
- le diamètre du fil d'apport est inférieur à 1,1 mm, de préférence compris entre 1 et 0,8 mm.
- le diamètre du fil d'apport est compris entre 0,6 et 1,5 mm.
- la ou les pièces métalliques à souder sont en acier au carbone ou inoxydable.
- le fil est un fil plein ou fourré.
- le chanfrein est complètement rempli par dépôt de métal provenant du fil fondu par l'arc et le faisceau laser.
- l'arc électrique est obtenu par mise en oeuvre d'un courant de 350 A à 500 A de préférence 400A à 500 A, et le faisceau laser est obtenu au moyen d'un dispositif laser de type CO₂, YAG ou à diodes.
- pendant le soudage, on met en oeuvre un gaz de protection constitué d'hélium, d'argon et d'oxygène, d'hélium, d'argon et de CO₂, d'hélium et d'argon, d'argon et d'oxygène, ou d'argon et de CO₂. Le choix du gaz le plus approprié pour souder tel ou tel matériau est à la portée de l'homme du métier et peut se faire par des essais empiriques.

Autrement dit, selon l'invention, il a été constaté en pratique que pour résoudre le problème susmentionné, il est judicieux d'augmenter la vitesse fil à plus de 20 m/min et ce, jusqu'à des valeurs de 30 à 40 m/min, ce qui s'obtient en général assez facilement en modifiant les rapports de réduction du moteur du dévidoir de fil, mais tout en utilisant simultanément un fil de diamètre inférieur à 1.2 mm et ce, contrairement à ce qui était opéré dans l'état de la technique.

En effet, à taux de métal déposé constant, la diminution du diamètre du fil d'apport a pour conséquence la diminution du courant nécessaire. On peut ainsi, pour la valeur maximum du courant délivré par le générateur de soudage, augmenter la quantité de métal fondu et donc remplir davantage le chanfrein à la vitesse de soudage considérée qui est supérieure à 2 m/min,

La Figure 1 illustre le procédé de soudage hybride laser-MIG de l'invention en montrant le comblement d'un chanfrein situé au niveau des bords de deux pièces à souder ensemble par dépôt, dans ledit chanfrein, de métal fondu amené sous forme d'un fil d'apport 2 dont la fusion est obtenue au moyen d'un arc électrique 6 et d'un faisceau laser 1 se combinant l'un à l'autre sous une buse de soudage 4, avec formation d'un capillaire 5 sous la zone de combinaison de l'arc avec le faisceau laser. La zone en cours de soudage est protégé de l'air ambiant par un gaz de protection 3 distribué sous la buse 4.

La photo de la figure 2 montre une macrographie de soudage (exemple comparatif selon l'art antérieur) obtenue en soudage hybride MIG sur un chanfrein réalisé dans une tôle d'épaisseur 8 mm selon le procédé de la Figure 1. La vitesse de soudage était de 3 m/mn, la puissance laser de 8 kW, la vitesse d'avance du fil de 19 m/mn, le diamètre du fil de 1,2 mm et le courant de soudage de 450 A. Comme on peut le voir, le chanfrein n'est pas complètement rempli dans ce cas.

A l'inverse, la photo de la figure 3 représente le même essai mais, dans ce cas, la vitesse d'avance du fil était de 30 m/mn et le diamètre du fil de 1 mm, c'est-à-dire selon le procédé de l'invention.

Comme on peut le voir dans ce cas, le chanfrein est alors complètement rempli lorsqu'on met en oeuvre le procédé de l'invention, ce qui démontre clairement la résolution du problème de comblement total de chanfrein grâce à l'adoption d'une vitesse de fil supérieure à 20 m/min et un diamètre de fil inférieur à 1.2 mm.

De façon plus générale, le procédé de soudage de la présente invention est particulièrement adapté à la fabrication de tubes sur des lignes de soudage automatiques et au raboutage ou à la pose de tubes, notamment en offshore ou en on-shore.

## Revendications

1. Procédé de soudage hybride laser-MIG, dans lequel on remplit au moins une partie d'un chanfrein aménagé entre les bords à souder ensemble en y déposant du métal fondu amené sous forme d'au moins un fil d'apport, la fusion dudit fil d'apport étant obtenue au moyen d'un arc électrique et d'un faisceau laser se combinant l'un à l'autre, **caractérisé en ce que**:
- le soudage est opéré à une vitesse de soudage d'au moins 2 m/min,
- la vitesse d'amenée du fil d'apport est d'au moins 20 m/min,
- et le diamètre du fil d'apport est inférieur à 1,2 mm.

2. Procédé selon la revendication 1, **caractérisé en ce que** les bords à souder sont portés par une pièce métallique unique ou par deux pièces métalliques différentes.

3. Procédé selon l'une des revendications 1 ou 2, **caractérisé en ce que** les bords à souder sont portés par un ou plusieurs tubes.

4. Procédé selon l'une des revendications 1 à 3, **caractérisé en ce que** le chanfrein aménagé entre les bords à souder a une forme de "V" ou de "X".

5. Procédé selon l'une des revendications 1 à 4, **caractérisé en ce que** le soudage est opéré à une vitesse de soudage comprise entre 2,5 et 4 m/mn.

6. Procédé selon l'une des revendications 1 à 5, **caractérisé en ce que** la vitesse d'amenée du fil d'apport est d'au moins 22 m/min, de préférence comprise entre 25 et 35 m/min.

7. Procédé selon l'une des revendications 1 à 6, **caractérisé en ce que** le diamètre du fil d'apport est inférieur à 1,1 mm, de préférence compris entre 1 et 0,8 mm.

8. Procédé selon l'une des revendications 1 à 7, **caractérisé en ce que** la ou les pièces métalliques à souder sont en acier au carbone ou inoxydable.

9. Procédé selon l'une des revendications 1 à 8, **caractérisé en ce que** le fil est un fil plein ou fourré.

10. Procédé selon l'une des revendications 1 à 9, **caractérisé en ce que** l'arc électrique est obtenu par mise en oeuvre d'un courant de 350 A à 500 A de préférence 400A à 500 A, et le faisceau laser est obtenu au moyen d'un dispositif laser de type CO₂, YAG ou à diodes.

11. Procédé selon l'une des revendications 1 à 10, **caractérisé en ce que**, pendant le soudage, on met en oeuvre un gaz de protection constitué :
- d'hélium, d'argon et d'oxygène,
- d'hélium, d'argon et de CO₂,
- d'hélium et d'argon,
- d'argon et d'oxygène, ou
- d'argon et de C0₂.

12. Procédé selon l'une des revendications 1 à 11, **caractérisé en ce que** le diamètre du fil d'apport est inférieur à 1,19 mm, de préférence inférieur à 1,17 mm.

13. Procédé selon l'une des revendications 1 à 12, **caractérisé en ce que** le diamètre du fil d'apport est compris entre 0,6 et 1,5 mm.

14. Procédé selon l'une des revendications 1 à 13, **caractérisé en ce que** le chanfrein est complètement rempli par dépôt de métal provenant du fil fondu par l'arc et le faisceau laser.
